# EUROPÄISCHE PATENTSCHRIFT

(11) **EP 0 630 347 B1**
(45) Veröffentlichungstag und Bekanntmachung des Hinweises auf die Patenterteilung: **03.01.1996**
(21) Anmeldenummer: 93905211.4
(22) Anmeldetag: 17.03.1993
(51) Int. Cl.: B65G 67/20

(54) **LADEPLATTFORM**
LOADING PLATFORM
PLATE-FORME DE CHARGEMENT

(30) Priorität: 17.03.1992 DE 4208779
(43) Veröffentlichungstag der Anmeldung: 28.12.1994
(73) Patentinhaber: Staege, Rüdiger, D-14129 Berlin 38 (DE)
(72) Erfinder: Staege, Rüdiger, D-14129 Berlin 38 (DE)
(74) Vertreter: Presting, Hans-Joachim, Dipl.-Ing.
(86) Internationale Anmeldenummer: DE9300260
(87) Internationale Veröffentlichungsnummer: WO9318992

(56) Entgegenhaltungen:
- EP-A- 0 299 912
- WO-A-87/04140
- DE-C- 3 432 312
- DE-C- 3 511 445

## Beschreibung

Die Erfindung betrifft eine Ladeplattform gemäß Oberbegriff des Patentanspruchs 1.

Heckseitige LKW-Ladesysteme für Standard LKW's sind bekannt, können jedoch die Paletten nur in Zweier- oder Dreiergruppen verladen (z.B. DE-C-35 11 445, DE-C-34 32 312, EP-A-0299912).

Bei einem durch die WO-A 87/04140 bekannten Ladesystem ist zur heckseitigen Schnellbeladung von Lastkraftwagen vorgesehen, Paletten auf langen mit Rollen versehenen Zinken, die ohne eine Schienenführung in den Laderaum einfahren, zu transportieren. Mangels einer Schienenführung der Zinken ergeben sich Genauigkeitsprobleme beim Absetzen der Paletten, insbesondere dann, wenn die Ladefläche nicht mehr in einwandfreiem ebenen Zustand ist.

Der Erfindung liegt die Aufgabe zugrunde, die heckseitige Beladung bzw. Entladung von Lastwagen, Lastwagenanhängern und Containern, die keine eigene Fördereinrichtung aufweisen, über die gesamte Länge der Ladefläche automatisch oder manuell steuerbar vornehmen zu können, wobei eine hohe Absetzgenauigkeit der Paletten gewährleistet ist, auch wenn die Ladefläche Unebenheiten aufweist.

Diese Aufgabe wird erfindungsgemäß dadurch gelöst, daß die Verbindung zwischen Ladeplattform und LKW-Ladefläche mittels von der Ladeplattform ausfahrbarer Schienen herstellbar ist, wobei auf den Schienen mittels Langzinken Paletten transportierbar sind.

Die weitere Ausbildung des Erfindungsgegenstandes geht aus den Merkmalen der Unteransprüche hervor.

Vorteil der Erfindung ist, daß eine Standard-LKW-Ladefläche durch von der Ladeplattform ausfahrbaren Schienen und Zinken in der in etwas gleichen Zeit beladen werden kann, wie eine mit Förderern ausgerüstete Spezial-LKW-Ladefläche. Ein weiterer Vorteil ist, daß nach Beendigung des Ladevorgangs die LKW-Ladefläche frei von bei manuellem Ladevorgang störenden Vorrichtungen ist.

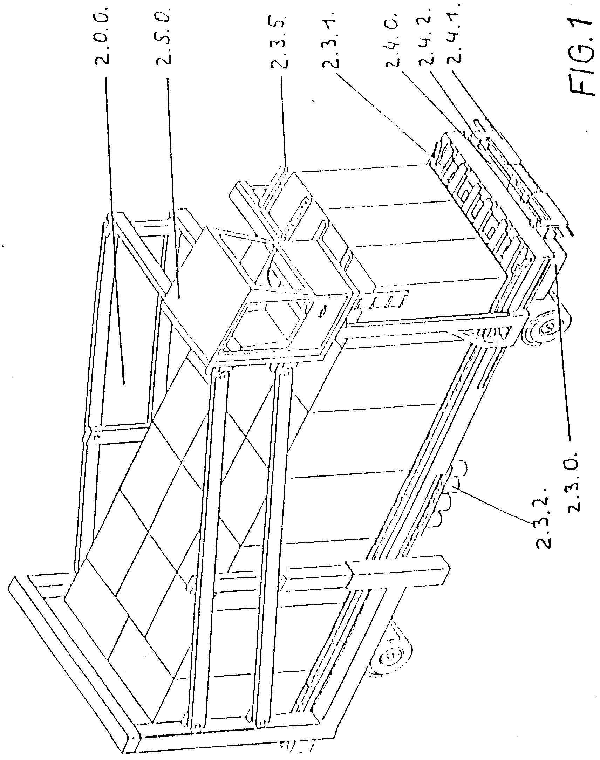

Ausführungsbeispiele der Erfindung sind in der Zeichnung perspektivisch dargestellt und werden nachstehend beschrieben. Es zeigen
- Fig. 1: eine Ladeplattform in einer rampenunabhängigen LKW-Be-/Entladeanlage,

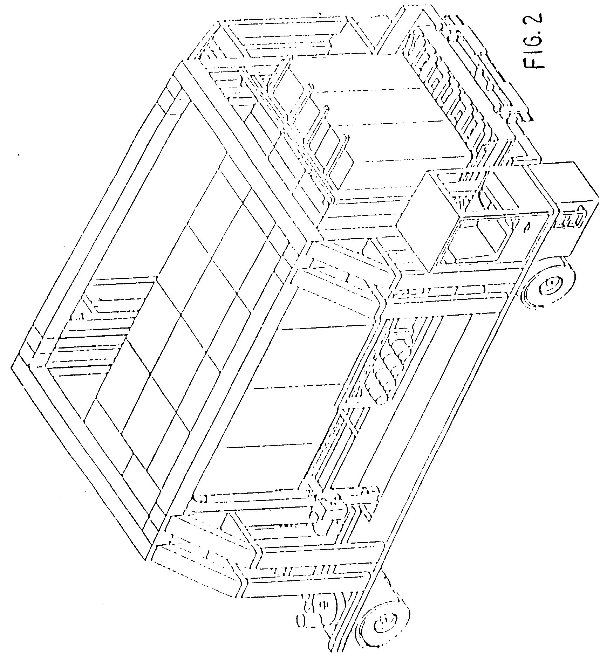

- Fig. 2: eine Ladeplattform in einer rampenunabhängigen LKW-Be-/Entladeanlage, die für mindestens eine weitere Plattform nachrüstbar ist,

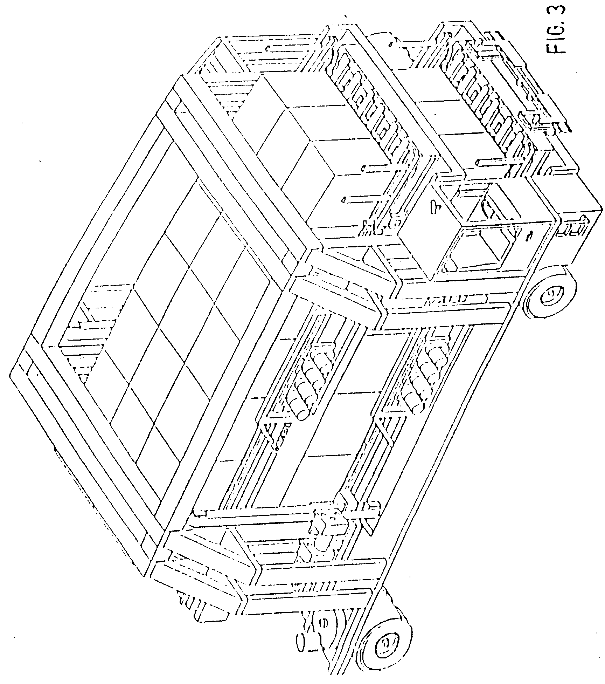

- Fig. 3: zwei Ladeplattformen in einer rampenunabhängigen LKW-Be-/Entladeanlage, die unter anderem für eine LKW-Ladefläche mit Zwischenboden geeignet ist.
- Fig. 4: zwei Ladeplattformen in einer rampengebundenen, an der Ladekante eines Lagers verfahrbaren LKW-Be-/Entladeanlage, die unter anderem für eine LKW-Ladefläche mit Zwischenboden geeignet ist und

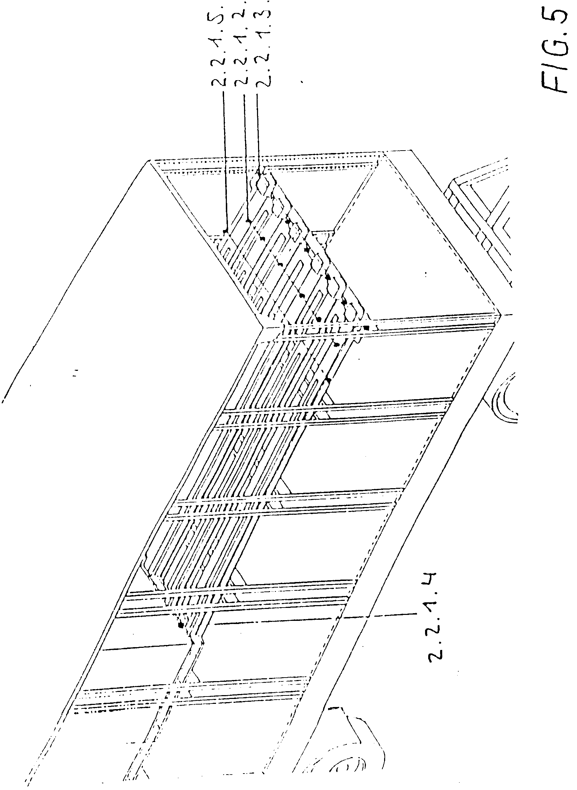

- Fig. 5: einen Ausschnitt der Fig. 4.

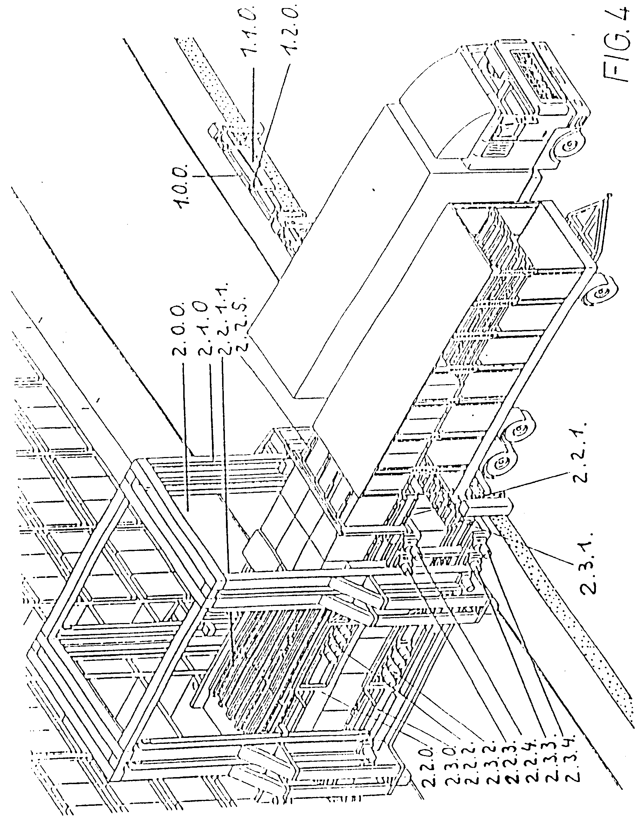

Ein LKW (s. Fig. 4) fährt mit der Heckseite seiner Ladefläche(n) in den Andockbereich (1.0.0.) und wird dort bei Erreichen einer vorgegebenen Position mittels Signal gestoppt. Die Prallfläche ist in Bewegungsrichtung der rückwärts andockenden LKW-Ladefläche verstellbar und schmiegt sich an die LKW-Heckkante bündig an. Mit Tastern ausgerüstete Niederhalter (1.2.0.) verfahren von einer mittig orientierten Grundstellung beidseitig nach außen bis zu den Innenseiten der LKW-Seitenwände und ermitteln Stellung und Breite der LKW-Ladefläche. Stimmen die ermittelten Daten mit programmierten Vorgaben nicht überein, wird der Ladevorgang abgebrochen. Erneutes Anfahren des LKW's ist dann erforderlich. Die Niederhalter (1.2.0.) geben der LKW-Federung durch belastendes Absenken der Ladekante eine Vorspannung, die die LKW-Ladefläche bei dem Ladevorgang an einer störenden Eigenbewegung hindert.

Die Ladevorrichtung (2.0.0.) verfährt seitlich zur Ladekante eines Bereithaltungslagers und übernimmt über Staukettenförderer (2.2.1.1.) eine komplette Palettenreihe, die die vorgesehene LKW-Ladefläche entsprechend ausfüllt. Die Ladevorrichtung fährt zu der vom LKW benutzten Andockstelle (1.1.0.) und richtet sich gemäß der durch die Taster oder Sensoren der Niederhalter (1.2.0.) ermittelten Stellung mittig zur LKW-Ladefläche aus. Bei Ladeflächen mit Zwischenboden wird zuerst der Zwischenboden beladen, wobei mittels sensorbestückter Unterseite von Schienen (2.2.1.2.) dessen korrekte Lage bzw. Verankerung kontrolliert wird.

Die Ladeplattform (2.2.1.) wird bis zur LKW-Heckkante in der Höhe so vorgefahren, daß beim ersten ca. 50 cm betragendes Ausfahren der Schienen (2.2.1.2.) aus der Ladeplattform, die Schienen in die zu beladende LKW-Ladefläche (z.B. Zwischenboden) ca. 10 cm erhöht, d.h. die Ladefläche nicht berührend, einfahren. Der Plattformträger (2.2.0.) wird bis zum Kontakt der sensorbestückten Unterkante der Schienen (2.2.1.2.) auf die zu beladende LKW-Ladefläche abgesenkt. die Schienen, die Abstandshalter (2.2.1.3.) aufweisen, werden bis zum Ende der LKW-Ladefläche parallel zur LKW-Seitenwand eingefahren.

Auf der Ladeplattform (2.2.1.) verbliebene Langzinken (2.2.1.4.) heben die Paletten an und transportieren sie über die Schienen (2.2.1.2.) auf die LKW-Ladefläche, ohne die LKW-Seitenwand zu berühren. Die jeweilige linke und rechte Langzinke (2.2.1.4.) wird gegenüber den inneren Langzinken etwas höher angehoben, um die Palettenladung einen beabsichtigten zur Mittelpalette geneigten Schrägstand zu geben, d.h. die Palettenladung bildet dadurch zwangsweise eine blockartige Einheit und wird somit von der LKW-Wand ferngehalten.

Die Schienen mit den Abstandshaltern (2.2.1.3.) werden unter den Paletten hindurch auf die Ladeplattform (2.2.1.) zurückgefahren. Die Paletten werden dann, die LKW-Ladefläche ausfüllend, abgesetzt. Vorhandene Querpaletten in der letzten Reihe verbleiben vorerst auf den Langzinken (2.2.1.4.).

Spezielle Zinken (2.2.5.) für Querpaletten fahren in die letzte Reihe der Querpaletten ein und heben sie an. Jetzt werden die Langzinken mit den Schienen (2.2.1.2.) unter den Querpaletten hindurch auf die Ladeplattform zurückgefahren. Die Querpaletten werden auf der LKW-Ladefläche abgesetzt. Die Zinken (2.2.5.) der Querpaletten fahren wie auch die Ladeplattform in ihre Ausgangsposition zurück. Der Ladevorgang des Zwischenbodens ist abgeschlossen, es folgt in gleicher Weise die Beladung der darunter befindlichen Grundladefläche.

Entladesysteme unterscheiden sich von Beladesystemen dahingehend, daß es, um ein sicheres Entladen gewährleisten zu können, erforderlich sein kann, links und rechts der Palettenreihe je eine zusätzliche Abstandplatte (2.2.1.5., nicht gezeichnet) einzufügen, die beim Entladen der Paletten diese von der jeweiligen LKW-Seitenwand fernhalten. Sollten Querpalleten als letzte verladen worden sein, so müssen diese nach dem Andocken des LKW's durch spezielle Zinken (2.2.5.) zuerst angehoben werden, um die Schienen (2.2.1.2.), sowie den nachfolgenden Langzinken (2.2.1.4.), die Einfahrt in die Längspaletten zu ermöglichen.

Rampenungebundene Anlagen sind in ihrer Funktionsweise des Be- und Entladens den rampengebundenen weitestgehend gleich, nur daß der Andockbereich (2.4.0.) mit der Prallfläche (2.4.1.) von der Anlage mitgeführt wird.

### Positionsnummern

- 1.0.0.: Andockbereich automatischer Anlagen (für LKW- Heckkante)
- 1.1.0.: federnd gelagerte Prallfläche
- 1.2.0.: Niederhalter mit Sensoren (dienen der Erfassung der LKW- Heckkante, sowie der Stabilisierung der LKW-Ladefläche beim Be- und Entladen)
- 2.0.0.: Ladevorrichtung (bei automatischen Anlagen innerhalb oder außerhalb eines Lagers seitlich zur Ladekante verfahrbar, bei manuellen Anlagen unabhängig steuerbar)
- 2.1.0.: Gerüst (bei automatischen Anlagen an Höhe des Bereithaltungslagers anpassbar)
- 2.2.0.: (oberer) Plattformträger
- 2.2.1.: Ladeplattform mit Staukettenförderern (Schienen mit Abstandhaltern ausgefahren, Langzinken mit Paletten in Vorschub)
- 2.2.1.1.: Staukettenförderer
- 2.2.1.2.: Schienen (Lauffläche für Langzinken)
- 2.2.1.3.: Abstandhalter (sie sollen die Schienen untereinander auf Abstand halten und dafür sorgen, daß die Schienen mittig auf der LKW - Ladefläche zu liegen kommen.)
- 2.2.1.4.: Langzinken (kaum erkennbar unter den Paletten eingezeichnet)
- 2.2.1.5.: Abstandplatten (nicht eingezeichnet, sie sollen beim entladen die Paletten beidseitig von der LKW - Wand fernhalten.)
- 2.2.2.: Antreibe für Staukettenförderer, Abstandhalter (für Abstand der Schienen von LKW- Wand und untereinander) Schienen und Langzinken
- 2.2.3.: Antrieb für Ladeplattform
- 2.2.4.: Stellmotor (für Winkelverstellung der Ladeplattform zum bündigen Kontakt an LKW- Heckkante)
- 2.2.5.: Zinken für Querpaletten
- 2.3.0.: (unterer) Plattformträger
- 2.3.1.: Ladeplattform mit Staukettenförderer (Schienen mit Abstandhalter, Langzinken und Palettenladung in Ausgangsposition)
- 2.3.2.: siehe 2.2.2.
- 2.3.3.: siehe 2.2.3.
- 2.3.4.: siehe 2.2.4.
- 2.3.5.: siehe 2.2.5.
- 2.4.0.: Andockbereich manueller Anlagen (für LKW- Heckkante)
- 2.4.1.: siehe 1.1.0.
- 2.4.2.: siehe 1.2.0
- 2.5.0.: Fahrerkabine für manuelle Anlagen

## Patentansprüche

1. Ladeplattform einer Vorrichtung für manuelle und automatisch gesteuerte heckseitige Be- und Entladung von Lastkraftwagen, Anhängern und Containern mit Paletten mittels nach dem Hubgabelprinzip arbeitender vier- oder sechszinkiger Ladeeinheit, die die Paletten von einer Sammelplattform aus einem Lager oder Fahrzeug bzw. Container übernimmt, wobei die Ladeplattform in einem rampengebundenen oder in einem rampenungebundenen, parallel zur Ladekante eines Lagers bzw. einer LKW-Andockstelle verfahrbaren Gerüst senkrecht auf und ab bewegbar ist,
dadurch gekennzeichnet,
daß die Verbindung zwischen Ladeplattform und LKW-Ladefläche mittels von der Ladeplattform ausfahrbarer Schienen (2.2.1.2.) herstellbar ist, wobei auf den Schienen (2.2.1.2.) mittels Langzinken (2.2.1.4.) Paletten transportierbar sind.

2. Ladeplattform nach Anspruch 1,
dadurch gekennzeichnet,
daß die Schienen (2.2.1.2.)an ihrer Unterseite mit Sensoren ausgestattet sind, durch die die LKW-Ladefläche auf korrekten Zustand kontrollierbar ist.

3. Ladeplattform nach Anspruch 1,
dadurch gekennzeichnet,
daß die Schienen (2.2.1.2.) beidseitig zur LKW-Wand und untereinander mit Abstandshaltern (2.2.1.3.) ausgerüstet sind.

4. Ladeplattform nach Anspruch 1,
dadurch gekennzeichnet,
daß sie mit Mitteln (Niederhalter 2.4.2.) zum belasteten Absenken der Ladekante der LKW-Ladefläche versehen ist.

5. Ladeplattform nach Anspruch 1,
dadurch gekennzeichnet,
daß Mittel (Niederhalter 2.4.2.) zum belasteten Absenken der Ladekante der LKW-Ladefläche Teil einer LKW-Andockstelle sind.

6. Ladeplattform nach einem der vorhergehenden Ansprüche,
dadurch gekennzeichnet,
daß die Langzinken (2.2.1.4.) mit mechanischen steuerbaren Mitteln ausgerüstet sind, die die Langzinken gegenüber den Schienen (2.2.1.2.) seitlich versetzbar machen, so daß zwischen die der LKW-Wand zugewandten Seiten der Paletten und der LKW-Wand je eine Abstandsplatte (2.2.1.5.) schiebbar ist.

7. Ladeplattform nach Anspruch 1,
dadurch gekennzeichnet,
daß um 90 Grad versetzte Paletten (Querpaletten) beim Entladen mittels Zinken(2.2.5.) so lange anhebbar sind, bis die Schienen (2.2.1.2.) und die Langzinken (2.2.1.4.) in die LKW-Ladefläche eingeschoben sind.

## Claims

1. Loading platform of apparatus for the manual and automatically controlled loading and unloading from the rear of HGVs, trailers and containers with pallets by means of a four- or six-pronged loading unit operating according to the fork-lift principle, which loading unit transfers the pallets from a collecting platform out of a warehouse or vehicle or container, the loading platform being movable up and down in a movable frame connected to the ramp or connected to a ramp and parallel to the loading edge of a warehouse or HGV docking point, characterised in that the link between the loading platform and the HGV loading surface can be formed by rails (2.2.1.2.), which are capable of extending from the loading platform, in which case pallets can be conveyed on the rails (2.2.1.2.) by means of longitudinal prongs (2.2.1.4.).

2. Loading platform according to claim 1, characterised in that the rails (2.2.1.2.) are equipped on their under-side with sensors for checking that the HGV loading surface is in the correct position.

3. Loading platform according to claim 1, characterised in that the rails (2.2.1.2.) are equipped with braces (2.2.1.3.) on either side of the HGV wall and between themselves.

4. Loading platform according to claim 1, characterised in that it is provided with means (holding-down devices 2.4.2.) for lowering the loading edge of the HGV loading surface in the loaded state.

5. Loading platform according to claim 1, characterised in that means (holding-down devices 2.4.2.) for lowering the loading edge of the HGV loading surface are part of a HGV docking point.

6. Loading platform according to one of the preceding claims, characterised in that the longitudinal prongs (2.2.1.4.) are equipped with mechanically controllable means which make the longitudinal prongs laterally displaceable relative to the rails (2.2.1.2.), so that a respective spacing plate (2.2.1.5.) is slidable between the sides of the pallets associated with the HGV wall and the HGV wall itself.

7. Loading platform according to claim 1, characterised in that pallets (transverse pallets) displaced through 90° can be raised until the rails (2.2.1.2.) and the longitudinal prongs (2.2.1.4.) have been inserted into the HGV loading surface.

## Revendications

1. Plate-forme de chargement d'un dispositif pour le chargement et le déchargement, du côté arrière, commandé manuellement et automatiquement de camions, remorques et conteneurs avec des palettes au moyen d'une unité de chargement à quatre roues ou six tenons ou dents, travaillant selon le principe d'une fourche de levage, qui reçoit les palettes d'une plate-forme de rassemblement à partir d'un entrepôt ou d'un véhicule ou conteneur, la plate-forme de chargement pouvant être soulevée et abaissée verticalement dans une cage liée à une rampe ou dans une cage liée à une rampe, déplaçable parallèlement au côté de chargement d'un entrepôt ou d'un quai pour camions,
caractérisée en ce que la liaison entre la plate-forme de chargement et la surface de chargement du camion est réalisée au moyen de rails (2.2.1.2.) pouvant sortir de la plate-forme de chargement, des palettes pouvant être transportées sur les rails (2.2.1.2.) au moyen de dents ou tenons longitudinaux (2.2.1.4.).

2. Plate-forme de chargement selon la revendication 1,
caractérisée en ce que les rails (2.2.1.2.) sont munis, sur leur dessous, de capteurs grâce auxquels l'état correct de la surface de chargement du camion peut être contrôlé.

3. Plate-forme de chargement selon la revendication 1,
caractérisée en ce que les rails (2.2.1.2.) sont équipés des deux côtés de la paroi du camion et l'un en dessous de l'autre d'entretoises (2.2.1.3.).

4. Plate-forme de chargement selon la revendication 1,
caractérisée en ce qu'elle est munie de moyens (serre-flans 2.4.2.) pour l'abaissement chargé du côté de chargement de la surface de chargement du camion.

5. Plate-forme de chargement selon la revendication 1,
caractérisée en ce que des moyens (serre-flans 2.4.2.) pour l'abaissement chargé du côté de chargement de la surface de chargement du camion font partie d'un quai pour camions.

6. Plate-forme de chargement selon l'une des revendications précédentes,
caractérisée en ce que les tenons longitudinaux (2.2.1.4.) sont équipés de moyens mécaniques commandables qui rendent les tenons longitudinaux latéralement déplaçables par rapport aux rails (2.2.1.2.) de sorte que, entre les côtés, en regard de la paroi du camion, des palettes et la paroi du camion, une plaque d'écartement (2.2.1.5.) est à chaque fois déplaçable.

7. Plate-forme de chargement selon la revendication 1,
caractérisée en ce que des palettes décalées de 90° (palettes transversales), lors du déchargement au moyen de dents ou tenons (2.2.5.), peuvent être soulevées jusqu'à ce que les rails (2.2.1.2.) et les tenons longitudinaux (2.2.1.4.) soient introduits sur la surface de chargement du camion.
